# EUROPEAN PATENT APPLICATION

(11) **EP 2 722 640 A1**
(43) Date of publication of application: **23.04.2014**
(21) Application number: 11868299.6
(22) Date of filing: 20.06.2011
(51) Int. Cl.: G01B 11/24

(54) **THREE-DIMENSIONAL SHAPE MEASURING DEVICE AND ROBOT SYSTEM**

(71) Applicant: Kabushiki Kaisha Yaskawa Denki, Kitakyushu-shi, Fukuoka 806-0004 (JP)
(72) Inventor: ICHIMARU, Yuji, Kitakyushu-shi, Fukuoka 806-0004 (JP)
(74) Representative: Grünecker, Kinkeldey, Stockmair & Schwanhäusser
(86) International application number: PCT/JP2011/064047
(87) International publication number: WO 2012/176262

(57) **Abstract**

A technical problem is to speed up the measurement processing of a three-dimensional shape. In order to solve the technical problem, a three-dimensional shape measuring apparatus 1 is configured so that an irradiating unit applies laser slit light while changing an irradiation position in an area under measurement, an imaging unit 16 images the reflected light of the laser slit light, a position detector 17d scans an image taken by the imaging unit to detect a laser position, and an imaging area changing unit 17b changes the position of the imaging area of the imaging unit 16 in accordance with the irradiation position of the laser slit light.

## Description

### Field

The present invention relates to a three-dimensional shape measuring apparatus and a robot system. Background

Conventionally, known is a three-dimensional shape measuring apparatus that measures the three-dimensional shape of an object (for example, see Patent Literature 1).

For example, the three-dimensional shape measuring apparatus applies a slit light beam to an object under measurement to image its reflected light with a camera. The three-dimensional shape measuring apparatus then scans all pixels of the taken image to detect the position of the light beam on the taken image and calculates the light receiving angle of the light beam from the detected position of the light beam.

Based on the irradiation angle of the light beam, which is known, and the calculated light receiving angle, the three-dimensional shape measuring apparatus determines the height of the object under measurement using the principle of triangulation. By repeating these pieces of processing with different irradiation angles of the light beam, the three-dimensional shape measuring apparatus can obtain the three-dimensional shape of the object under measurement.

### Citation List

### Patent Literature

Patent Literature 1: Japanese Patent Application Laid-open No. H07-270137

### Summary

### Technical Problem

The conventional three-dimensional shape measuring apparatus, however, requires much time for the processing of detecting the position of the light beam from the taken image, which impedes the speed-up of the measurement processing of a three-dimensional shape.

The disclosed technology has been achieved in view of the above circumstances, and an object thereof is to provide a three-dimensional shape measuring apparatus and a robot system that can speed up the measurement processing of a three-dimensional shape.

### Solution to Problem

A three-dimensional shape measuring apparatus according to an aspect of embodiments includes an irradiating unit, an imaging unit, a position detector, and a changing unit. The irradiating unit applies a slit light beam while changing an irradiation position in an area under measurement. The imaging unit images reflected light of the light beam. The position detector scans an image taken by the imaging unit to detect a position of the light beam on the image. The changing unit changes a position of an imaging area of the imaging unit in accordance with the irradiation position of the light beam.

A robot system according to an aspect of embodiments includes a three-dimensional shape measuring apparatus, a robot controller, and a robot. The three-dimensional shape measuring apparatus includes an irradiating unit, an imaging unit, a position detector, and a changing unit. The irradiating unit applies a slit light beam while changing an irradiation position in an area under measurement. The imaging unit images reflected light of the light beam. The position detector scans an image taken by the imaging unit to detect a position of the light beam on the image. The changing unit changes a position of an imaging area of the imaging unit in accordance with the irradiation position of the light beam. The robot controller acquires, from the three-dimensional shape measuring apparatus, information indicating a three-dimensional shape of a workpiece in the area under measurement and instructs a robot to perform a predetermined operation on the workpiece based on the acquired information. The robot performs a predetermined operation on the workpiece in accordance with an instruction from the robot controller.

### Advantageous Effects of Invention

An embodiment of a three-dimensional shape measuring apparatus and a robot system disclosed by the present application can speed up the measurement processing of a three-dimensional shape.

### Brief Description of Drawings

FIG. 1 is a schematic external view of a three-dimensional shape measuring apparatus according to a first embodiment.
FIG. 2 is a block diagram illustrating the configuration of the three-dimensional shape measuring apparatus according to the first embodiment.
FIG. 3 is a diagram illustrating an operation example of imaging area changing processing.
FIG. 4 is a diagram illustrating a three-dimensional shape measuring method.
FIG. 5 is a flowchart illustrating a processing procedure performed by the three-dimensional shape measuring apparatus according to the first embodiment.
FIG. 6-1 is an explanatory diagram of drive speed adjustment processing.
FIG. 6-2 is an explanatory diagram of the drive speed adjustment processing.
FIG. 6-3 is explanatory diagram of the drive speed adjustment processing.
FIG. 7 is a block diagram illustrating the configuration of a three-dimensional shape measuring apparatus according to a second embodiment.
FIG. 8-1 is an explanatory diagram of imaging control processing.
FIG. 8-2 is an explanatory diagram of the imaging control processing.
FIG. 9 is a block diagram illustrating the configuration of a three-dimensional shape measuring apparatus according to a third embodiment.
FIG. 10-1 is an explanatory diagram of reading range control processing.
FIG. 10-2 is an explanatory diagram of the reading range control processing.
FIG. 11 is a diagram illustrating another configuration of a three-dimensional shape measuring apparatus.
FIG. 12 is a diagram illustrating the configuration of a robot system.

### Description of Embodiments

Described below with reference to the attached drawings in detail are several embodiments of a three-dimensional shape measuring apparatus and a robot system disclosed by the present application. The present invention is not limited by the embodiments described below.

### First embodiment

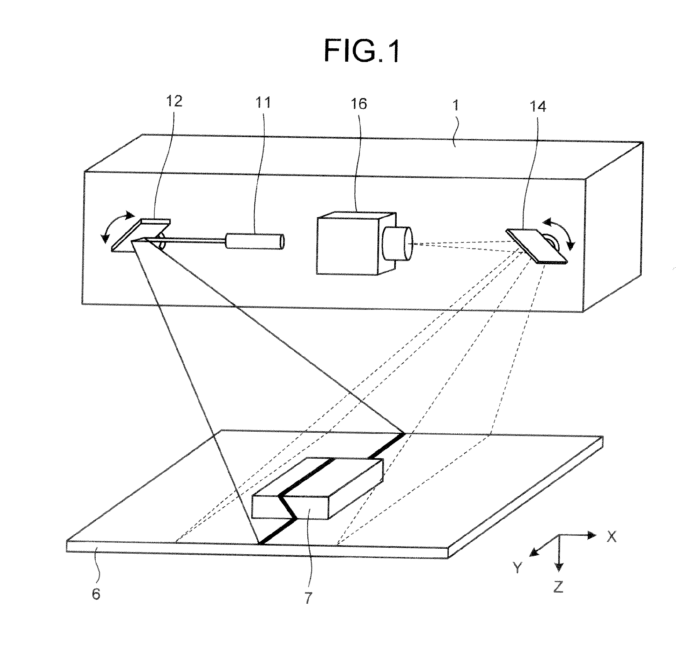

Described first with reference to FIG. 1 is the external configuration of a three-dimensional shape measuring apparatus according to a first embodiment. FIG. 1 is a schematic external view of the three-dimensional shape measuring apparatus according to the first embodiment.

In the following, in view of making the description easy to understand, an XY coordinate system as an orthogonal coordinate system is provided on a mounting plane for an object under measurement 7, with the vertically downward direction with respect to the mounting plane as the Z-axis. The following describes a case of, with a rectangular parallelepiped mounted on a stage 6 as the object under measurement 7, measuring the three-dimensional shape of the object under measurement 7 with this three-dimensional shape measuring apparatus 1 from vertically above.

As illustrated in FIG. 1, the three-dimensional shape measuring apparatus 1 is a measuring apparatus that acquires the three-dimensional shape of an object through a scanning operation using a slit light beam (hereinafter called the "laser slit light"). First, the three-dimensional shape measuring apparatus 1 applies the laser slit light from a laser device 11 to a light-emitting side mirror 12.

The three-dimensional shape measuring apparatus 1 then applies the laser slit light while changing its irradiation position on the stage 6 by rotating the light-emitting side mirror 12. While the irradiation position of the laser slit light moves on the stage 6 from the negative direction to the positive direction in the X-axis, the laser slit light is applied from obliquely above with respect to the stage 6.

The three-dimensional shape measuring apparatus 1 allows the reflected light of the laser slit light applied to the stage 6 or the object under measurement 7 to be reflected by a light-receiving side mirror 14 into an imaging unit 16. The three-dimensional shape measuring apparatus 1 scans an image taken by the imaging unit 16, thereby detecting the position of the laser slit light on the image, and measures the three-dimensional shape of the object under measurement 7 by triangulation using the detected laser position.

In the three-dimensional shape measuring apparatus 1, the imaging unit 16 images, not the entire area under measurement (for example, the entire stage 6), but only the partial area thereof. For this reason, the three-dimensional shape measuring apparatus 1 according to the first embodiment can reduce the time required for image scanning as compared to the conventional three-dimensional shape measuring apparatus. In other words, because it can perform the processing of detecting the position of the laser slit light from an image taken by the imaging unit 16 in a short time, it can perform the measurement of a three-dimensional shape more speedily as compared to the conventional three-dimensional shape measuring apparatus.

The three-dimensional shape measuring apparatus 1 according to the first embodiment changes the position of the imaging area in accordance with the irradiation position of the laser slit light, thereby allowing appropriate imaging of the reflected light of the laser slit light off the stage 6 even when the imaging area is reduced as described above. Described specifically below is the configuration and operation of the three-dimensional shape measuring apparatus 1 according to the first embodiment.

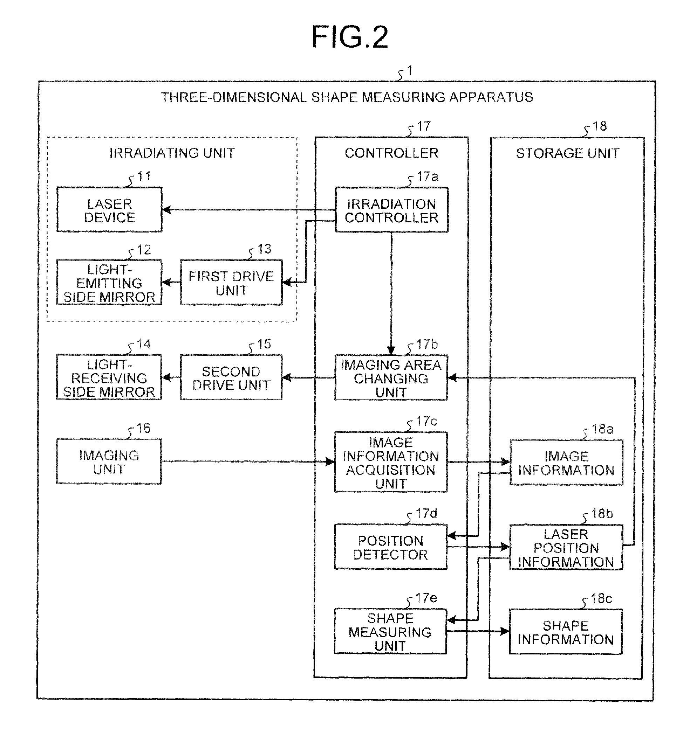

Described next with reference to FIG. 2 is the configuration of the three-dimensional shape measuring apparatus 1 according to the first embodiment. FIG. 2 is a block diagram illustrating the configuration of the three-dimensional shape measuring apparatus according to the first embodiment. FIG. 2 illustrates only components necessary for describing the features of the three-dimensional shape measuring apparatus 1, and omits general components.

As illustrated in FIG. 2, the three-dimensional shape measuring apparatus 1 includes the laser device 11, the light-emitting side mirror 12, a first drive unit 13, the light-receiving side mirror 14, a second drive unit 15, the imaging unit 16, a controller 17, and a storage unit 18.

The controller 17 includes an irradiation controller 17a, an imaging area changing unit 17b, an image information acquisition unit 17c, a position detector 17d, and a shape measuring unit 17e. The storage unit 18 stores therein image information 18a, laser position information 18b, and shape information 18c.

The laser device 11, which is a light beam generating unit that generates the laser slit light, applies the generated laser slit light toward the light-emitting side mirror 12. The light-emitting side mirror 12 is a mirror that reflects the laser slit light generated by the laser device 11 into the stage 6.

The first drive unit 13 is a drive unit that rotationally drives the light-emitting side mirror 12 in accordance with an instruction from the irradiation controller 17a. The first drive unit 13 is configured with, for example, a motor. The first drive unit 13 rotates the light-emitting side mirror 12, thereby allowing the irradiation position of the laser slit light applied from the laser device 11 onto the stage 6 to move from the negative direction toward the positive direction in the X-axis.

The laser device 11, the light-emitting side mirror 12, and the first drive unit 13 are examples of an irradiating unit that applies the laser slit light while changing the irradiation position with respect to the object under measurement 7.

The light-receiving side mirror 14 is a mirror that allows the reflected light of the laser slit light off the stage 6 to be reflected into the imaging unit 16. The second drive unit 15 is a drive unit that rotates the light-receiving side mirror 14 in accordance with an instruction from the imaging area changing unit 17b. The second drive unit 15 is configured with, for example, a motor. The second drive unit 15 rotates the light-receiving side mirror 14, thereby changing the imaging area of the imaging unit 16.

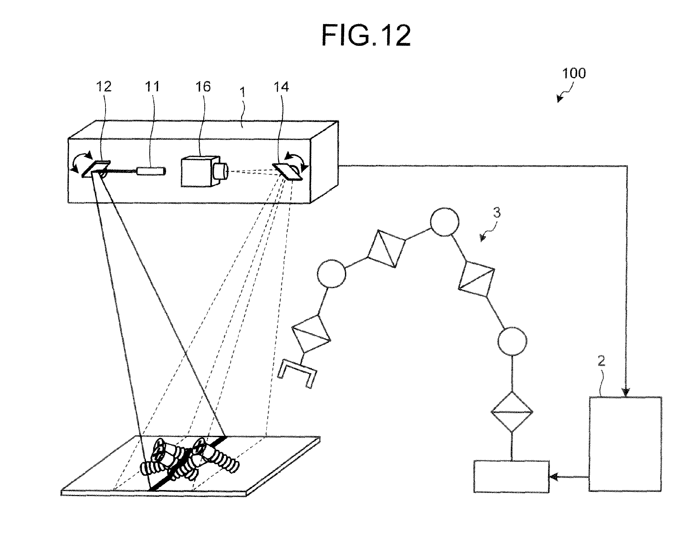

In the first embodiment, the light-emitting side mirror 12 and the light-receiving side mirror 14 are rotated by the different drive units as described above. However, the light-emitting side mirror 12 and the light-receiving side mirror 14 may be cooperatively driven by one drive unit. This point will be described later with reference to FIG. 12.

The imaging unit 16 is, for example, a camera having a complementary metal oxide semiconductor (CMOS) sensor as a light-receiving element. The imaging unit 16 images the reflected light of the laser slit light off the stage 6 or the object under measurement 7.

The imaging unit 16 outputs the taken image to the image information acquisition unit 17c. The light-receiving element of the imaging unit 16 is not limited to the CMOS sensor, and any image sensor such as a charge coupled device (CCD) sensor may be adopted.

The controller 17 is a controller that controls the entire three-dimensional shape measuring apparatus 1 and includes the irradiation controller 17a, the imaging area changing unit 17b, the image information acquisition unit 17c, the position detector 17d, and the shape measuring unit 17e.

The irradiation controller 17a is a processing unit that outputs a control signal to instruct the laser device 11 to apply the laser slit light and performs processing of outputting to the first drive unit 13 a control signal to instruct to rotate the light-emitting side mirror 12.

The irradiation controller 17a also performs processing of outputting to the imaging area changing unit 17b information indicating the rotation angle of the light-emitting side mirror 12 (hereinafter called the "angle information").

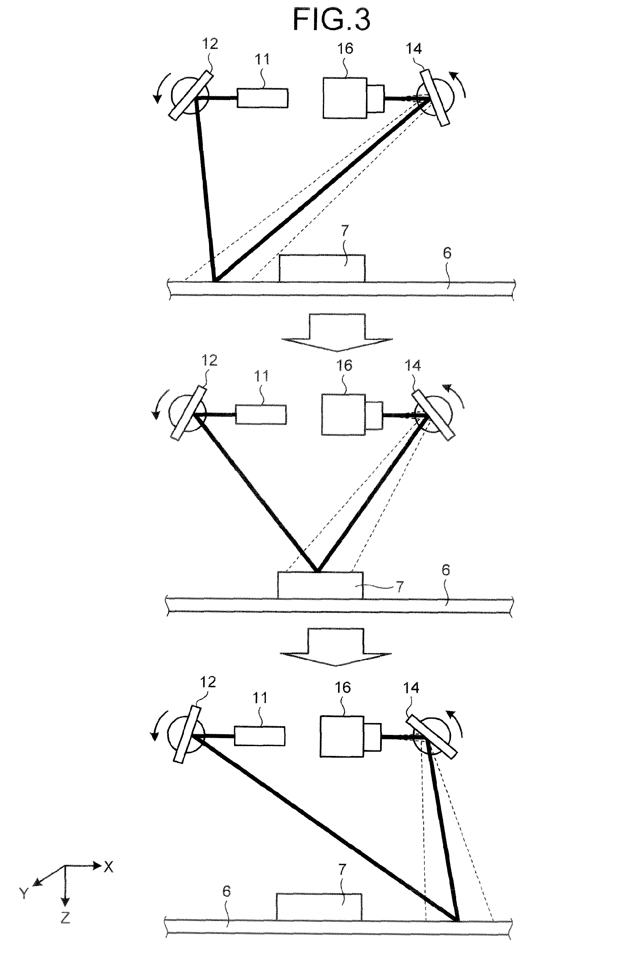

The imaging area changing unit 17b is a processing unit that changes the position of the imaging area of the imaging unit 16 in accordance with the irradiation position of the laser slit light on the stage 6. Imaging area changing processing by the imaging area changing unit 17b is described here with reference to FIG. 3. FIG. 3 is a diagram illustrating an operation example of the imaging area changing processing.

The imaging area changing unit 17b, using the angle information received from the irradiation controller 17a, instructs the second drive unit 15 to make the angle of the light-receiving side mirror 14 an angle corresponding to the angle of the light-emitting side mirror 12.

Specifically, the relation between the angle of the light-emitting side mirror 12 and the irradiation position of the laser slit light on the stage 6 is known, and the relation between the angle of the light-emitting side mirror 12 and the imaging area of the imaging unit 16 is also known. Given this situation, the three-dimensional shape measuring apparatus 1 according to the first embodiment changes the angle of the light-receiving side mirror 14 in accordance with the angle of the light-emitting side mirror 12, thereby, as illustrated in FIG. 3, allowing the imaging area of the imaging unit 16 to follow the irradiation position of the laser slit light on the stage 6.

This enables appropriate imaging of the reflected light of the laser slit light off the stage 6 even when the imaging unit 16 images part of the area on the stage 6. As compared to the conventional three-dimensional shape measuring apparatus in which an imaging unit images the entire area under measurement, the time required for image scanning can be reduced, thereby speeding up the measurement processing of a three-dimensional shape.

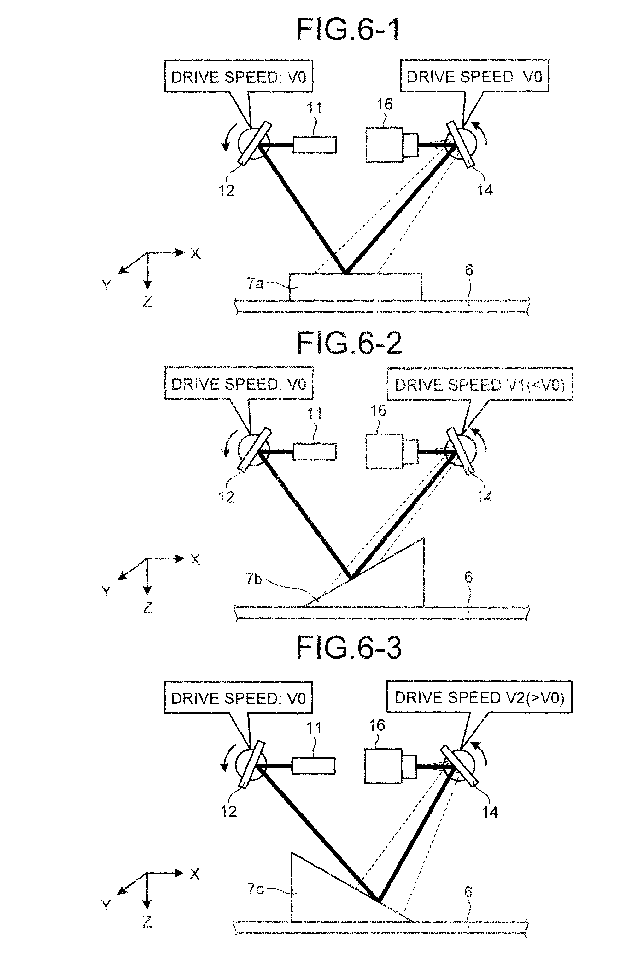

The imaging area changing unit 17b according to the first embodiment also performs processing of determining the moving speed of the laser slit light from the laser position detected by the position detector 17d and adjusting the drive speed of the light-receiving side mirror 14 in accordance with the moving speed. These points will be described later with reference to FIG. 6-1 to FIG. 6-3.

Returning back to FIG. 2, the description of the controller 17 continues. The image information acquisition unit 17c is a processing unit that successively acquires images taken by the imaging unit 16 from the imaging unit 16 and stores them as the image information 18a in the storage unit 18. The image information acquisition unit 17c reads and acquires information corresponding to all the light-receiving elements of the imaging unit 16.

The position detector 17d is a processing unit that detects a laser position in the image taken by the imaging unit 16 based on the image information 18a stored in the storage unit 18.

Specifically, the position detector 17d scans the image taken by the imaging unit 16 on a line-by-line basis. The position detector 17d detects, as a laser position, the position of a pixel that shows the highest brightness among pixels whose brightness exceeds a predetermined threshold among the scanned pixels. When no pixel exists that exceeds the predetermined threshold, it is regarded to be no laser detection.

Upon finishing the above detection processing for all lines, the position detector 17d stores in the storage unit 18 the detection result as the laser position information 18b. Because the three-dimensional shape measuring apparatus 1 according to the first embodiment has a narrower imaging area as compared to the conventional apparatus, the detection processing of the laser position by the position detector 17d can be performed in a short time.

The shape measuring unit 17e is a processing unit that measures the three-dimensional shape of the object under measurement 7 by the principle of triangulation based on the laser position information 18b stored in the storage unit 18. The shape measuring unit 17e also performs processing of storing in the storage unit 18 the measurement result of the three-dimensional shape as the shape information 18c.

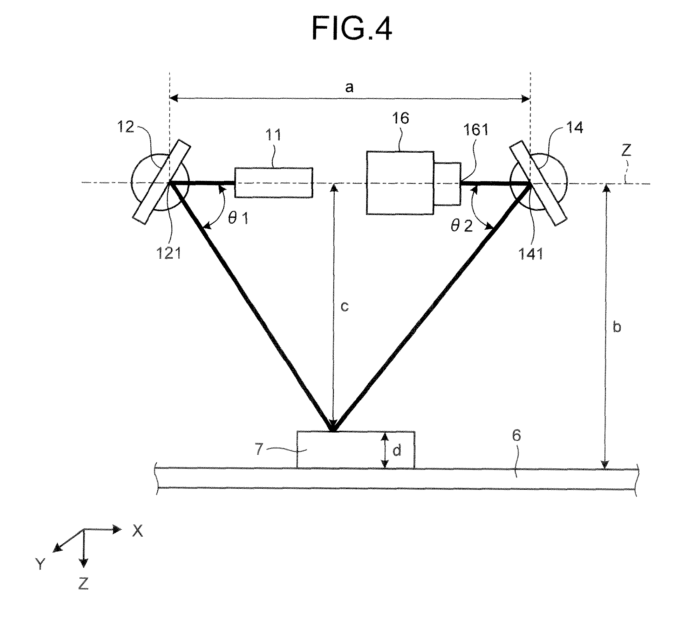

Described simply with respect to FIG. 4 is a three-dimensional shape measuring method with the shape measuring unit 17e. FIG. 4 is a diagram illustrating the three-dimensional shape measuring method.

As illustrated in FIG. 4, the three-dimensional shape measuring apparatus 1 arranges the light-emitting side mirror 12, the light-receiving side mirror 14, and the imaging unit 16 to position a reflection position 121 of the laser slit light on the light-emitting side mirror 12, a reflection position 141 of the laser slit light on the light-receiving side mirror 14, and a light-receiving position 161 of the laser slit light on the imaging unit 16 on the same plane (hereinafter denoted as the "reference plane Z") parallel to the stage 6.

The distance "a" between the reflection position 121 of the laser slit light on the light-emitting side mirror 12 and the reflection position 141 of the laser slit light on the light-receiving side mirror 14 is known. The height "b" from the reference plane Z to the stage 6 is also known.

First, the shape measuring unit 17e calculates the irradiation angle θ1 of the laser slit light with respect to the object under measurement 7 based on the rotation angle of the light-emitting side mirror 12 and calculates the light receiving angle θ2 of the laser slit light based on the rotation angle of the light-receiving side mirror 14 and the laser position information 18b.

Subsequently, the shape measuring unit 17e calculates the height "c" from the reference plane Z to the object under measurement 7 by the principle of triangulation using the calculated irradiation angle θ1 and light receiving angle θ2 and the known distance a.

The shape measuring unit 17e then subtracts the calculated height c from the known height b to calculate the height "d" of the object under measurement 7. The height d for each part of the object under measurement 7 is thus calculated separately, thereby acquiring the three-dimensional shape of the object under measurement 7.

Returning back to FIG. 2, the storage unit 18 will be described. The storage unit 18 is configured with a storage device such as a nonvolatile memory and a hard disk drive and stores therein the image information 18a, the laser position information 18b, the shape information 18c, or the like.

The image information 18a is information indicating an image taken by the imaging unit 16, and the laser position information 18b is information indicating a laser position in each image taken by the imaging unit 16. The shape information 18c is information indicating the three-dimensional shape of the object under measurement 7 measured by the three-dimensional shape measuring apparatus 1.

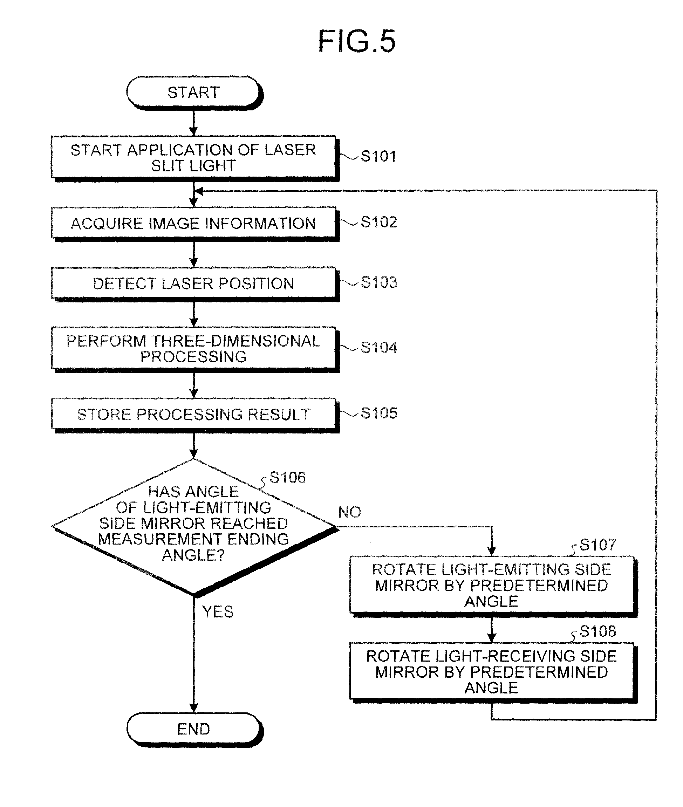

Described next with reference to FIG. 5 is a specific operation of the three-dimensional shape measuring apparatus 1. FIG. 5 is a flowchart illustrating a processing procedure performed by the three-dimensional shape measuring apparatus 1 according to the first embodiment.

As illustrated in FIG, 5, in the three-dimensional shape measuring apparatus 1, when the application of the laser slit light is started in accordance with a control signal from the irradiation controller 17a (Step S101), the image information acquisition unit 17c acquires the image information of an image taken by the imaging unit 16 (Step S102).

Next, in the three-dimensional shape measuring apparatus 1, the position detector 17d performs the detection processing of the laser position based on the image information of the image acquired by the image information acquisition unit 17c (Step S103). The shape measuring unit 17e then performs three-dimensional calculation processing based on the detection result of the laser position (Step S104) and stores the calculation result as the shape information 18c in the storage unit 18 (Step S105).

Then, in the three-dimensional shape measuring apparatus 1, it is determined whether the angle of the light-emitting side mirror 12 has reached a measurement ending angle (Step S106). If the angle of the light-emitting side mirror 12 has not reached the measurement ending angle in that processing (No at Step S106), the irradiation controller 17a rotates the light-emitting side mirror 12 by a predetermined angle (Step S107), and the imaging area changing unit 17b rotates the light-receiving side mirror 14 by a predetermined angle in accordance with the angle of the light-emitting side mirror 12 (Step S108).

The three-dimensional shape measuring apparatus 1 repeats the pieces of processing at Steps S102 to S108 until the angle of the light-emitting side mirror 12 reaches the measurement ending angle. If it is determined that the angle of the light-emitting side mirror 12 has reached the measurement ending angle (Yes at Step S106), the three-dimensional shape measuring apparatus 1 finishes the processing.

The laser position detected by the position detector 17d moves along with the irradiation position of the laser slit light. In some cases, even when the moving speed of the laser position, that is, the moving speed of the light-emitting side mirror 12 is constant, the moving speed of the laser position detected by the position detector 17d may not be constant depending on the shape of the object under measurement 7. For this reason, even when the light-receiving side mirror 14 is driven in accordance with the irradiation position of the laser slit light, the reflected light of the laser slit light may not be able to be appropriately imaged depending on the shape of the object under measurement 7.

Given this situation, the imaging area changing unit 17b determines the moving speed of the laser position based on the laser position detected by the position detector 17d and adjusts the drive speed of the light-receiving side mirror 14 in accordance with the determined moving speed. This enables appropriate imaging of the reflected light of the laser slit light regardless of the shape of the object under measurement 7.

Described below with reference to FIG. 6-1 to FIG. 6-3 is the adjustment processing of the drive speed of the light-receiving side mirror 14 (hereinafter denoted as the "drive speed adjustment processing") performed by the imaging area changing unit 17b. FIG. 6-1 to 6-3 are explanatory diagrams of the drive speed adjustment processing.

FIG. 6-1 illustrates an example case of measuring an object under measurement 7a whose top plane is parallel to the stage 6, and FIGS. 6-2 and 6-3 illustrate example cases of measuring objects under measurement 7b and 7c whose top plates are not parallel to the stage 6. Assume that the drive speed V0 of the light-emitting side mirror 12 and image taking intervals by the imaging unit 16 are constant.

As illustrated in FIG. 6-1, when the top plane of the object under measurement 7a is parallel to the stage 6, the reflected light of the laser slit light applied to the top plane of the object under measurement 7a moves at nearly the same speed as the drive speed V0 of the light-emitting side mirror 12. The imaging area changing unit 17b accordingly drives the light-receiving side mirror 14 at the same drive speed V0 as the light-emitting side mirror 12.

As illustrated in FIG. 6-2, assume that the top plane of the object under measurement 7b slopes upward in the moving direction of the laser slit light (the positive direction in the X-axis). In this case, the reflected light of the laser slit light applied to the top plane of the object under measurement 7b moves at a lower speed than the drive speed V0 of the light-emitting side mirror 12.

The imaging area changing unit 17b accordingly drives the light-receiving side mirror 14 at a lower drive speed V1 than the drive speed V0 of the light-emitting side mirror 12.

As illustrated in FIG. 6-3, assume that the top plane of the object under measurement 7c slopes downward in the moving direction of the laser slit light (the positive direction in the X-axis). In this case, the reflected light of the laser slit light applied to the top plane of the object under measurement 7c moves at a higher speed than the drive speed V0 of the light-emitting side mirror 12.

The imaging area changing unit 17b accordingly drives the light-receiving side mirror 14 at a higher drive speed V2 than the drive speed V0 of the light-emitting side mirror 12.

The moving speed of the laser position can be calculated based on the detection history of the laser position by the position detector 17d. For example, the imaging area changing unit 17b calculates the moving speed of the laser position based on the laser position detected from an image taken last time and the laser position detected from an image taken the time before last.

In other words, the image taking intervals by the imaging unit 16 are constant and known. Based on this, the imaging area changing unit 17b calculates the moving distance between the laser positions detected from the image taken last time and the image taken the time before last and calculates the moving speed of the laser position by dividing the calculated moving distance by the image taking interval of the imaging unit 16. By using the image taken last time and the image taken the time before last, a moving speed closest to the current moving speed of the laser position can be obtained.

The moving speed of the laser position is not necessarily required to be calculated using the image taken last time and the image taken the time before last. In other words, the imaging area changing unit 17b may calculate the moving speed of the laser position using an image before the time before last.

The imaging area changing unit 17b thus adjusts the drive speed of the light-receiving side mirror 14 in accordance with the moving speed of the laser position detected by the position detector 17d, thereby allowing imaging of the reflected light of the laser slit light off the object under measurement regardless of the shape of the object under measurement.

As the irradiation position of the laser slit light moves closer to the edge of the area under measurement, in other words, as the irradiation angle θ1 of the laser slit light becomes smaller (see FIG. 4), the moving speed of the laser position tends to increase. The tendency is remarkable in particular when the area under measurement is long in the X-direction.

Given this situation, for example, the imaging area changing unit 17b may perform adjustment so that as the irradiation angle θ1 of the laser slit light decreases, the drive speed of the light-receiving side mirror 14 increases. This allows appropriate imaging of the reflected light of the laser slit light off the object under measurement regardless of the irradiation position of the laser slit light.

As described above, in the first embodiment, the irradiating unit applies the laser slit light while changing the irradiation position in the area under measurement; the imaging unit images the reflected light of the laser slit light; the position detector scans the image taken by the imaging unit, thereby detecting the laser position; and the imaging area changing unit changes the position of the imaging area of the imaging unit in accordance with the irradiation position of the laser slit light. In other words, position detection processing needs only to be performed for a smaller imaging area at a time for the area under measurement, thereby reducing the time required for the position detection processing and speeding up the measurement processing of a three-dimensional shape.

The first embodiment allows the position of the imaging area to change, thereby allowing wider-area measurement as compared to the conventional three-dimensional shape measuring apparatus in which the imaging area is fixed.

While the conventional three-dimensional shape measuring apparatus in which the imaging area is fixed has limitation on an area that allows measurement of the object under measurement as a specific shape (for example, a pyramidal one), the three-dimensional shape measuring apparatus 1 according to the first embodiment can change the imaging area, thereby placing no limitation on the way the object under measurement is set and allowing measurement processing with a higher degree of freedom.

The three-dimensional shape measuring apparatus 1 according to the first embodiment has the laser position nearly at the center of the imaging area at all times, thereby reducing the influence of lens distortion and improving measurement accuracy.

The three-dimensional shape measuring apparatus 1 according to the first embodiment can include an imaging unit whose imaging area is smaller than the imaging area of the conventional three-dimensional shape measuring apparatus, thereby cutting down on the cost of the imaging unit.

### Second embodiment

The difference (the distance in the X-axis direction) increases between the laser position of the reflected light off the stage 6 and the laser position of the reflected light off the object under measurement with an increase in the height of the object under measurement.

Given this situation, the size of the imaging area of the imaging unit 16 may be changed in accordance with the laser position detected by the position detector 17d. Described below is an example of this case.

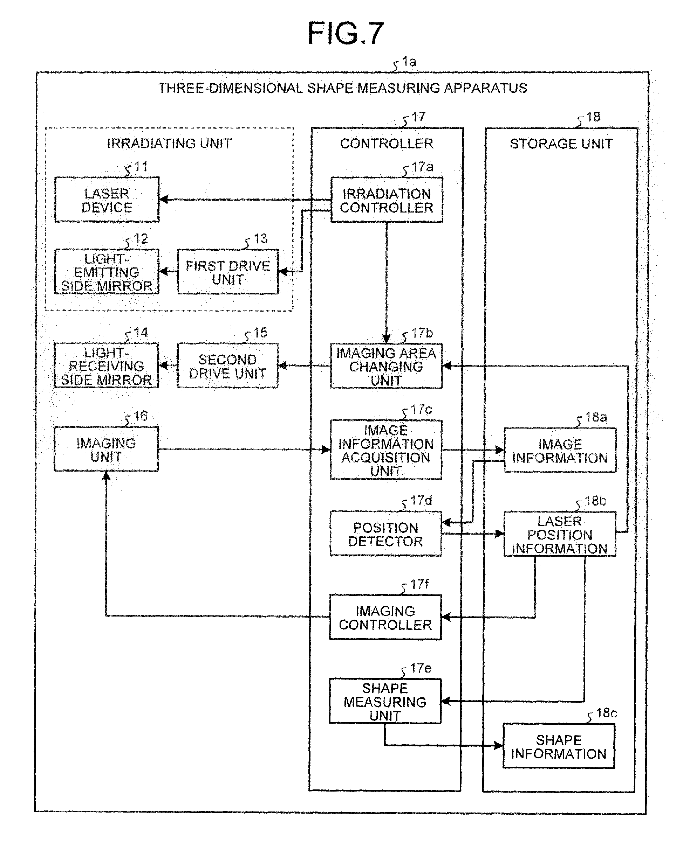

Described first with reference to FIG. 7 is the configuration of a three-dimensional shape measuring apparatus according to a second embodiment. FIG. 7 is a block diagram illustrating the configuration of the three-dimensional shape measuring apparatus according to the second embodiment. In the following description, the same parts as the parts already described will be given the same reference numerals, and the description thereof will be omitted.

As illustrated in FIG. 7, the controller 17 of this three-dimensional shape measuring apparatus 1a according to the second embodiment further includes an imaging controller 17f. The imaging controller 17f is a processing unit that changes the size of the imaging area of the imaging unit 16 based on the laser position detected by the position detector 17d. The imaging controller 17f changes the size of the imaging area by controlling the number of light-receiving elements performing light reception among the light-receiving elements of the imaging unit 16.

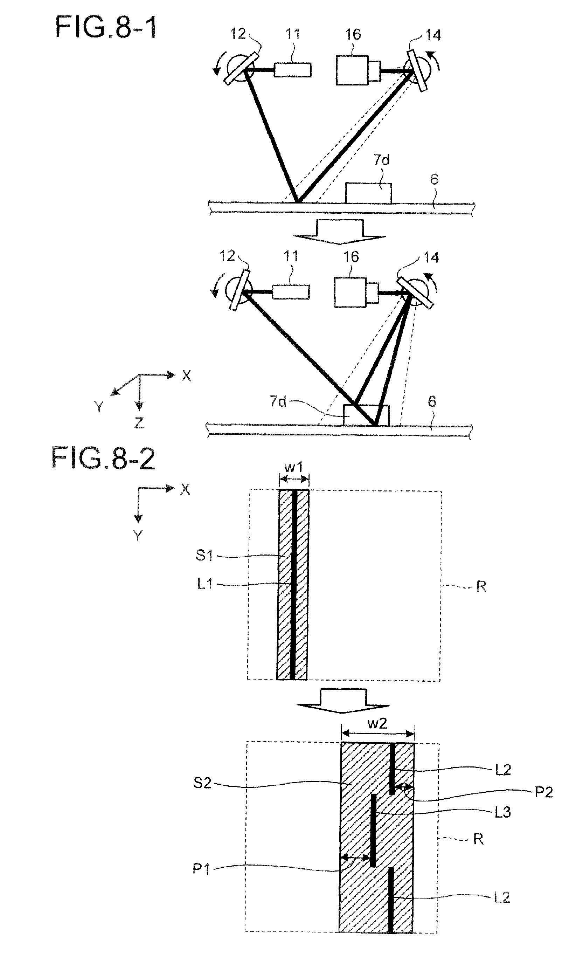

Described here with reference to FIG. 8-1 and FIG. 8-2 are the specific details of imaging control processing by the imaging controller 17f. FIG. 8-1 and FIG. 8-2 are explanatory diagrams of the imaging control processing. The sign R illustrated in FIG. 8-1 and FIG. 8-2 represents the area under measurement.

For example, as illustrated in FIG. 8-1, the laser slit light is applied to the stage 6 on which an object under measurement 7d is mounted from the negative direction to the positive direction in the X axis.

As illustrated in the upper diagram of FIG. 8-1, when the laser slit light is not applied to the object under measurement 7d, in other words, when the laser slit light is applied only to the stage 6, a laser position L1 detected by the position detector 17d is a straight line as illustrated in the upper diagram of FIG. 8-2.

In this case, the imaging controller 17f controls the number of light-receiving elements performing light reception so that, for example, the width of an imaging area S1 in the X-axis direction is a predetermined width w1. The imaging unit 16 thereby images the imaging area with the width w1 in the X-axis direction at the next imaging.

As illustrated in the lower diagram of FIG. 8-1, when the laser slit light reaches a position on which the object under measurement 7d is mounted, as illustrated in the lower diagram of FIG. 8-2, a difference occurs between a laser position L2 of the reflected light off the stage 6 and a laser position L3 of the reflected light off the object under measurement 7d. In other words, the width of the detected laser position in the X-axis direction is larger in a place on which the object under measurement 7d is mounted as compared to in a place on which the object under measurement 7d is not mounted.

Given this situation, the imaging controller 17f controls the number of light-receiving elements performing light reception so that the width of an imaging area S2 in the X-axis direction becomes a width w2 that is larger than the width w1. As a result of this, the imaging area S2 of the imaging unit 16 at the place on which the object under measurement 7d is mounted becomes larger than the imaging area S1 at the place on which the object under measurement 7d is not mounted. For this reason, even when the width of the detected laser position in the X-axis direction increases, the laser position can be appropriately detected.

In contrast, the imaging area S1 at the place on which the object under measurement 7d is not mounted becomes smaller than the imaging area S2 of the imaging unit 16 at the place on which the object under measurement 7d is mounted. This reduces an excessive amount of image data, and the time required to acquire an image and to detect the laser position.

As described above, the second embodiment allows change in the size of the imaging area of the imaging unit based on the laser position detected by the position detector. In other words, the width of the imaging area in the X-axis direction is increased or decreased in accordance with the size of the imaging area of the imaging unit, thereby further speeding up the measurement processing of a three-dimensional shape while preventing an omission in the detection of the laser position.

The imaging controller 17f, for example, can determine the width of the imaging area in the X-axis direction to be a width between a position at a predetermined distance in the negative X-axis direction from the edge of the detected laser position on the negative X-axis direction side and another position at a predetermined distance in the positive X-axis direction from the edge of the detected laser position on the positive X-axis direction side.

For example, in a case illustrated in the lower diagram of FIG. 8-2, the width of the imaging area in the X-axis direction is determined to be the width w2 between a position at a predetermined distance P1 from the laser position L3 in the negative X-axis direction and another position at a predetermined distance P2 from the laser position L2 in the positive X-axis direction. The predetermined distance P1 in the negative X-axis direction and the predetermined distance P2 in the positive X-axis direction may be the same value or may be different values.

The imaging controller 17f may change the size of the imaging area in accordance with the height (for example, the height d illustrated in FIG. 4) of the object under measurement calculated based on the laser position. In other words, the imaging controller 17f may specify the height of a workpiece from shape information obtained at the last scanning and determine the width of the imaging area in accordance with the specified height of the workpiece.

### Third embodiment

In the above second embodiment, the size of the imaging area of the imaging unit 16 is changed in accordance with the laser position detected by the position detector 17d. However, the reading range of an image read from the imaging unit 16 may be changed based on the laser position detected by the position detector 17d. Described below is an example of this case.

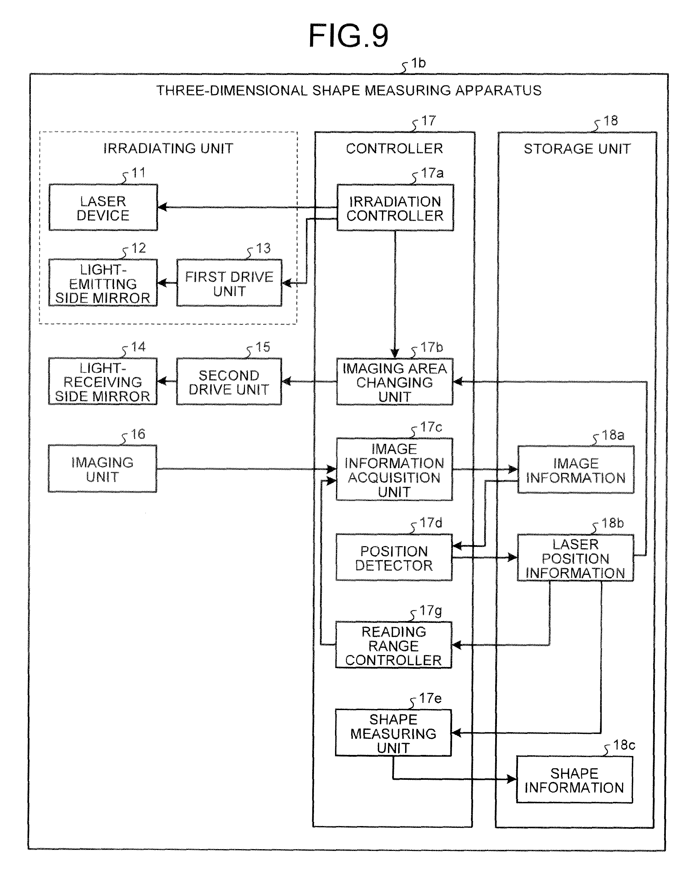

Described first with reference to FIG. 9 is the configuration of a three-dimensional shape measuring apparatus according to a third embodiment. FIG. 9 is a block diagram illustrating the configuration of the three-dimensional shape measuring apparatus according to the third embodiment. In the following description, the same parts as the parts already described will be given the same reference numerals, and the description thereof will be omitted.

As illustrated in FIG. 9, the controller 17 of this three-dimensional shape measuring apparatus 1b according to the third embodiment further includes a reading range controller 17g. The reading range controller 17g is a processing unit that changes the reading range of an image read from the imaging unit 16 based on the laser position detected by the position detector 17d. The reading range controller 17g changes the reading range by instructing the image information acquisition unit 17c from which light-receiving element it should read information, among the respective light-receiving elements of the imaging unit 16.

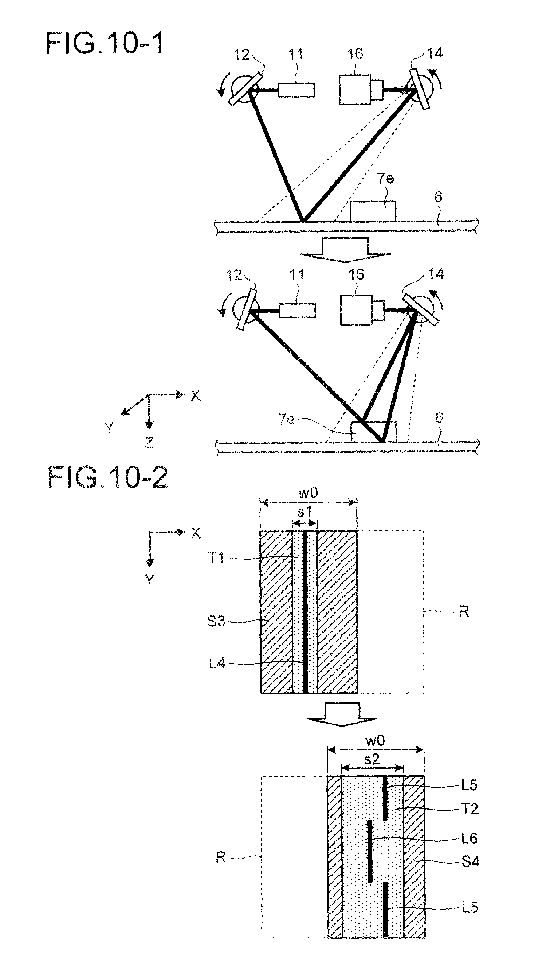

Described here with reference to FIG. 10-1 and FIG. 10-2 are the specific details of reading range control processing by the reading range controller 17g. FIG. 10-1 and FIG. 10-2 are explanatory diagrams of the reading range control processing.

As illustrated in FIG. 10-1, in the same manner as the second embodiment, the laser slit light is applied to the stage 6 on which an object under measurement 7e is mounted from the negative X-axis direction to the positive direction. While in the above second embodiment the size of the imaging area is changed based on the laser position, in the third embodiment the reading range from the imaging unit 16 is changed without changing the size of the imaging area (in other words, with a width w0 of the imaging area in the X-axis direction kept constant).

Specifically, as already described in the second embodiment, when the laser slit light is applied only to the stage 6, a laser position L4 detected by the position detector 17d is a straight line as illustrated in the upper diagram of FIG. 10-2.

In this case, the reading range controller 17g instructs the image information acquisition unit 17c to read image information of a reading range T1 having a predetermined width s1 including the laser position L4 within an imaging area S3. The image information acquisition unit 17c thereby, when the next image is taken by the imaging unit 16, reads only the image information of the reading range T1 among the image information input from the imaging unit 16 and stores it as the image information 18a in the storage unit 18.

As illustrated in the lower diagram of FIG. 10-1, when the laser slit light reaches a position on which the object under measurement 7e is mounted, as illustrated in the lower diagram of FIG. 10-2, a difference occurs between a laser position L5 of the reflected light off the stage 6 and a laser position L6 of the reflected light off the object under measurement 7e.

In this case, the reading range controller 17g instructs the image information acquisition unit 17c to read image information of a reading range T2 having a predetermined width s2 including the laser positions L5 and L6 within an imaging area S4. As illustrated in the lower diagram of FIG. 10-2, the width s2 of the image information read from the imaging area S4 is smaller than the width s1 of the image information read from the imaging area S3. In other words, the reading range T2 is larger than the reading range T1. The image information acquisition unit 17c thereby, when the next image is taken by the imaging unit 16, reads only the image information of the reading range T2 among the image information input from the imaging unit 16 and stores it as the image information 18a in the storage unit 18.

Thus, in the third embodiment, the reading range controller changes the reading range of the image read from the imaging unit based on the laser position detected by the position detector. In other words, the width of the reading range in the X-axis direction is increased or decreased in accordance with the width of the laser position in the X-axis direction, thereby, in the same manner as in the second embodiment, further speeding up the measurement processing of a three-dimensional shape while preventing an omission in the detection of the laser position.

The reading range controller, in the same manner as in the second embodiment, can determine the width of the imaging area in the X-axis direction to be a width between a position at a predetermined distance in the negative X-axis direction from the edge of the detected laser position on the negative X-axis direction side and another position at a predetermined distance in the positive X-axis direction from the edge of the detected laser position on the positive X-axis direction side.

### Fourth embodiment

In the above-described embodiments, a case of driving the light-emitting side mirror 12 and the light-receiving side mirror 14 by the first drive unit 13 and the second drive unit 15, respectively. However, the present invention is not limited to these. In other words, the light-emitting side mirror 12 and the light-receiving side mirror 14 may be cooperatively driven by one drive unit.

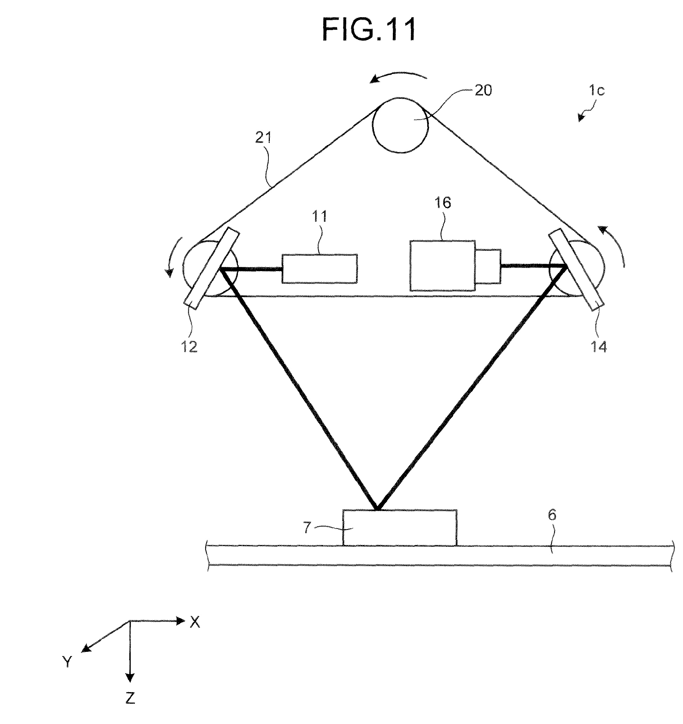

This case will be described below with reference to FIG. 11. FIG. 11 is a diagram illustrating another configuration of a three-dimensional shape measuring apparatus.

As illustrated in FIG. 11, this three-dimensional shape measuring apparatus 1c according to a fourth embodiment includes a third drive unit 20 in place of the first drive unit 13 and the second drive unit 15. The third drive unit 20 is, in the same manner as the first drive unit 13 and the second drive unit 15, configured with a motor or the like and is drive-controlled by the imaging area changing unit 17b.

In the three-dimensional shape measuring apparatus 1c according to the fourth embodiment, for example, pulleys are set on a shaft of the third drive unit 20, a rotating shaft of the light-emitting side mirror 12, and a rotating shaft of the light-receiving side mirror 14, and a belt 21 is trained around the pulleys. In the three-dimensional shape measuring apparatus 1c, the third drive unit 20 is rotationally driven to transmit its torque to the light-emitting side mirror 12 and the light-receiving side mirror 14 through the belt 21, thereby cooperatively driving the light-emitting side mirror 12 and the light-receiving side mirror 14.

Thus, in the fourth embodiment, the imaging area changing unit cooperatively drives the light-emitting side mirror and the light-receiving side mirror through one drive unit, thereby, while changing the irradiation position of the laser slit light, changing the imaging area of the imaging unit in accordance with the irradiation position. This can cut down on the cost of the three-dimensional shape measuring apparatus.

FIG. 11 illustrates an example case of rotating the light-emitting side mirror 12 and the light-receiving side mirror 14 at the same speed. However, for example, the pulley diameters of the light-emitting side mirror 12 and the light-receiving side mirror 14 are made appropriately different, thereby allowing the light-emitting side mirror 12 and the light-receiving side mirror 14 to rotate at different speeds. Speed reducers whose reduction ratios are adjusted in accordance with a distance under measurement may be provided between the respective pulleys and the light-emitting side mirror 12 and the light-receiving side mirror 14.

### Fifth embodiment

Described next with reference to FIG. 12 is an embodiment of a robot system to which a three-dimensional shape measuring apparatus is adopted. FIG. 12 is a diagram illustrating the configuration of the robot system. Described here is an example of a robot system adopting the three-dimensional shape measuring apparatus according to the first embodiment. The three-dimensional shape measuring apparatuses according to the second to fourth embodiments can also be adopted similarly.

Described below is an example case of allowing a robot to perform operation to retrieve workpieces one by one from workpieces loaded in bulk. FIG. 12 illustrates screws as an example of the workpiece. The workpiece may be any component other than screws.

As illustrated in FIG. 12, this robot system 100 includes the three-dimensional shape measuring apparatus 1, a robot controller 2, and a robot 3. The three-dimensional shape measuring apparatus 1 is installed above the workpieces loaded in bulk and measures the tree-dimensional shape of the workpieces.

The robot controller 2 is connected to the three-dimensional shape measuring apparatus 1 and the robot 3 and acquires the shape information 18c on the workpieces loaded in bulk from the three-dimensional shape measuring apparatus 1. The robot controller 2 determines a workpiece to be operated based on the acquired shape information 18c and instructs the robot 3 on the retrieving operation of the determined workpiece.

The robot 3 includes a robot hand that holds a workpiece, at the tip of a robot arm having, for example, seven-axis joints. The robot 3 holds the workpiece by driving the robot arm and the robot hand based on the position and orientation of the workpiece to be operated input from the robot controller 2 and retrieves it. The robot 3 may subsequently perform operation to mount the retrieved workpiece to a given component or the like.

The robot system 100 is configured as described above, and the three-dimensional shape measuring apparatus 1 measures the three-dimensional shape of the workpiece based on the laser position detected by the position detector 17d while allowing the imaging area of the imaging unit 16 that is narrower than that in the conventional apparatus to follow the irradiation position of the laser slit light.

The robot system 100 can thereby reduce the processing time from the start of the shape measurement of the workpiece by the three-dimensional shape measuring apparatus 1 to the holding of the workpiece by the robot 3, thereby improving operating efficiency.

In the robot system 100, the operation instruction output from the robot controller 2 to the robot 3 may also be output to the three-dimensional shape measuring apparatus 1, thereby changing the size of the imaging area or the size of the reading range based on the operation instruction.

When a specific workpiece is retrieved by the robot 3 from the workpieces loaded in bulk, only the shape around the retrieved workpiece may change, and no shape change may occur in areas other than that.

Given this situation, the three-dimensional shape measuring apparatus 1 determines the area around the workpiece retrieved by the robot 3 from the operation instruction to the robot 3 output from the robot controller 2 and changes the size of the imaging area or the size of the reading range based on the determined area. For example, the three-dimensional shape measuring apparatus 1 may change the size of the imaging area or the size of the reading range so that the determined area coincides with the imaging area or the reading range. This can further speed up the measurement processing of a three-dimensional shape.

In a fifth embodiment, the three-dimensional shape measuring apparatus 1 and the robot 3 are provided separately. However, the three-dimensional shape measuring apparatus 1 may be provided integrally at the tip of the robot arm of the robot 3.

In that configuration, the robot controller 2 drives the robot arm to move the three-dimensional shape measuring apparatus 1 to a position at which the shape of the workpiece to be operated can be measured, every time the robot 3 finishes the workpiece mounting operation. This configuration can achieve space-saving in the installation space of the robot system 100.

In the above-described embodiments, the irradiation position of the laser slit light in the area under measurement is changed by changing the angle of the light-emitting side mirror 12, that is, the irradiation angle. However, the irradiation position of the laser slit light in the area under measurement can also be changed while the irradiation angle is kept constant.

For example, the laser slit light is applied to the area under measurement while the laser device 11 is moved in parallel with the XY-plane, thereby allowing the irradiation position of the laser slit light in the area under measurement to be changed without changing the irradiation angle.

The above-described embodiments describe example cases of changing the position of the imaging area of the imaging unit 16 by rotationally driving the light-receiving side mirror 14. However, the imaging area may be changed by rotationally driving the imaging unit 16 itself. In this case, the imaging unit 16 may be provided at the installation position of the light-receiving side mirror 14, and may be driven by the second drive unit 15.

Further advantageous effects and modifications can be easily derived by those skilled in the art. For this reason, a wider embodiment according to the present invention is not limited to the specific details and the representative embodiments represented and described as above. Thus, without departing from the sprit or scope of the comprehensive ideas of the invention defined by the attached claims and their equivalents, various modifications are possible.

### Reference Signs List

- 1, 1a to 1c: Three-dimensional shape measuring apparatus
- 11: Laser device
- 12: Light-emitting side mirror
- 13: First drive unit
- 14: Light-receiving side mirror
- 15: Second drive unit
- 16: Imaging unit
- 17: Controller
- 17a: Irradiation controller
- 17b: Imaging area changing unit
- 17c: Image information acquisition unit
- 17d: Position detector
- 17e: Shape measuring unit
- 17f: Imaging controller
- 17g: Reading range controller
- 18: Storage unit
- 18a: Image information
- 18b: Laser position information
- 18c: Shape information
- 2: Robot controller
- 3: Robot
- 6: Stage
- 7, 7a to 7e: Object under measurement

## Claims

1. A three-dimensional shape measuring apparatus, comprising:
an irradiating unit that applies a slit light beam while changing an irradiation position in an area under measurement;
an imaging unit that images reflected light of the light beam;
a position detector that scans an image taken by the imaging unit to detect a position of the light beam on the image; and
a changing unit that changes a position of an imaging area of the imaging unit in accordance with the irradiation position of the light beam.

2. The three-dimensional shape measuring apparatus according to claim 1, further comprising:
a light-receiving side mirror that reflects the reflected light of the light beam into the imaging unit, wherein
the changing unit drives the light-receiving side mirror in accordance with the irradiation position of the light beam to change the position of the imaging area.

3. The three-dimensional shape measuring apparatus according to claim 2, wherein the changing unit adjusts a drive speed of the light-receiving side mirror in accordance with a moving speed of the position of the light beam detected by the position detector.

4. The three-dimensional shape measuring apparatus according to claim 3, wherein the changing unit calculates the moving speed of the position of the light beam based on the position of the light beam detected in an image taken last time and the position of the light beam detected in an image taken the time before last.

5. The three-dimensional shape measuring apparatus according to claim 1, further comprising an imaging controller that changes a size of the imaging area based on the position of the light beam detected by the position detector.

6. The three-dimensional shape measuring apparatus according to claim 1, further comprising a reading range controller that changes a reading range of an image to be read from the imaging unit based on the position of the light beam detected by the position detector.

7. The three-dimensional shape measuring apparatus according to claim 2, wherein the irradiating unit further comprises:
a light beam generating unit that generates the light beam; and
a light-emitting side mirror that reflects the light beam generated by the light beam generating unit into the area under measurement, wherein
the changing unit cooperatively drives the light-receiving side mirror and the light-emitting side mirror through one drive unit, to change the irradiation position of the light beam and change the position of the imaging area of the imaging unit in accordance with the irradiation position.

8. A robot system, comprising:
a three-dimensional shape measuring apparatus, comprising:
an irradiating unit that applies a slit light beam while changing an irradiation position in an area under measurement;
an imaging unit that images reflected light of the light beam;
a position detector that scans an image taken by the imaging unit to detect a position of the light beam on the image; and
a changing unit that changes a position of an imaging area of the imaging unit in accordance with the irradiation position of the light beam;
a robot controller that acquires, from the three-dimensional shape measuring apparatus, information indicating a three-dimensional shape of a workpiece in the area under measurement and instructs a robot to perform a predetermined operation on the workpiece based on the acquired information; and
a robot that performs a predetermined operation on the workpiece in accordance with an instruction from the robot controller.
